# EUROPEAN PATENT APPLICATION

(11) **EP 1 511 162 A1**
(43) Date of publication of application: **02.03.2005**
(21) Application number: 04019704.8
(22) Date of filing: 19.08.2004
(51) Int. Cl.: H02K 41/02

(54) **Moving device, image reading device and image forming apparatus**

(30) Priority: 26.08.2003 JP 2003301077; 26.08.2003 JP 2003301508
(71) Applicant: Konica Minolta Medical & Graphic Inc., Tokyo 163-0512 (JP)
(72) Inventor: Umemura, Masahiro, 2970 Ishikawa-machi Tokyo, 192-8505 (JP)
(74) Representative: Henkel, Feiler & Hänzel

(57) **Abstract**

An image reading/forming device to read/form an image by moving a moving object including either a stimulativ e fluorescent substance sheet on which the image is recorded or a reading/recording section to read/record the image, to the other. The image reading/forming device including a guide member to guide the moving object and a linear motor to move the moving object, the linear motor comprises of a magnet section formed into a shaft-like style having plural magnets extending in the moving direction and a movable coil to straightly moving the moving object. And the linear motor and the guide member are arranged in a row along the direction perpendicular to the moving direction of the moving object.

## Description

### BACKGROUND OF THE INVENTION

The present invention relates to a moving device, image reading device and image forming apparatus, and especially, to a moving device by which a generation of speed unevenness of the movement is suppressed and a moving object is smoothly moved, an image reading device and an image forming apparatus.

### DESCRIPTION OF RELATED ART

Generally, in various fields, a moving device for linearly moving a moving object is used, by using a DC motor, stepping motor or linear motor, as a driving source. As a device to which such a moving device is applied, for example, there is an image reading device by which, while linearly moving a recording medium in which an image is recorded, as a moving object, by a moving device, an image is read by scanning a laser light in the direction perpendicular to the moving direction, or an image forming apparatus in which, while reciprocally moving a laser irradiation device which is a moving object by a moving device, by irradiating the laser light to a recording medium conveyed in the direction perpendicular to the moving direction of the laser light irradiation device, according to a predetermined image data, and an image is formed.

Particularly, in a field of the medical care, a radiation image is widely used for a disease diagnosis, and as a method for obtaining this radiation image, a method is conducted by which, after the radiation transmitted through the subject is accumulated and recorded in a stimulative fluorescent substance sheet, and when an excitation light is irradiated by the image reading device, the accumulated and recorded radiation energy is stimulation light-emitted, and when the intensity of this stimulatively emitted light is converted into an electric signal, and according to this electric signal, a visual image is formed in the recording medium by the image forming apparatus.

In the image reading device and image forming apparatus, used in the field of the medical care as described above, especially, from a viewpoint in which the diagnosis of disease is conducted according to the obtained image, it is required that a very fine image is obtained. In order to obtain the very fine image, because it is necessary that the scanning of the recording medium or the laser light irradiation device is accurately and smoothly conducted, recently, it is proposed that a linear motor is used as a drive source of the moving device for linearly moving the recording medium or the laser light irradiation device.

As the image forming apparatus in which the linear motor is used as the drive source for the movement of the laser light irradiation device, the image forming apparatus which has a cylindrical support drum rotatable while supporting the recording medium, and the laser light irradiation device which is provided in opposite to this support drum, and while reciprocally moving in the width direction of the recording medium, according to a predetermined image data, irradiates the laser light, and in which the linear motor to move this laser light irradiation device is provided, is well-known (for example, refer to Patent Document 1).

This image forming apparatus has a holding section which holds the laser light irradiation device which is the moving object, and on almost central portion of the lower surface of this holding section, a movable coil whose sectional shape is L letter-shape constituting a linear motor, is provided, and is arranged in a situation that the movable coil is sandwiched in a magnet section whose section is C letter-shape provided on the lower portion of the holding section, and on the lower portion of both ends of the holding section, the moving device in which guided members by which the movement of the holding member is guided, are respectively provided, is applied.

### [Patent Document 1] Tokkai-hei 11-216921.

However, in the conventional technology, because the object to be conveyed is conveyed in such a manner that it is arranged so as to be sandwiched in parallel to a linear motor by two guide members, by the sliding-movement resistance of two guides, the delay is generated in a single of them, or depending on the parallel balance at the time of assembling, the vibration is generated and the smooth conveyance can not be conducted, and thereby, the speed unevenness of the object to be conveyed is worsened, and when the stimulative fluorescent plate is scanned by the stimulative excitation light, the image unevenness is generated, and there is a case where the diagnostic image is hindered. Further, because a plurality of guide members are used, there is a problem that the apparatus becomes large and the cost is increased.

Further, in such a conventional technology, when the rigidity of a horizontal portion and vertical portion of the movable coil are insufficient, a delay is generated in the holding section to the conveying speed of the linear motor, or the vibration is generated and the smooth conveyance can not be conducted, and as a result, the position dislocation is generated in the irradiation of the laser light to the recording medium by the laser light irradiation device held by the holding section, and there is a case where the image unevenness is generated. Accordingly, in order to obtain a fine image, it is necessary that the rigidity of the movable coil is increased, as a result, there is a problem that it is necessary that the movable coil has a dimension more than a predetermined one, and there is a limitation in the size reduction and the cost reduction of the apparatus.

Further, in the linear motor whose magnet section is c-letter shape, the using efficiency of the magnetic flux is not good, and when the large thrust is wanted to obtain, it is necessary that the magnetic flux density is increased, and as a result, also because the dimension of the magnet section is increased, there is a limitation in the size reduction and the cost reduction of the apparatus.

In view of such a problem of the conventional technology, the first object of the present invention is to provide an image reading device in which the cost is low and the size is reduced, and by which a fine diagnostic image having no image unevenness is obtained.

Further, in the conventional technology, an encoder to detect a position of the moving object or the moving speed is provided in the vicinity of the moving device, and according to the detection result by this encoder, the drive of the moving device is appropriately controlled, however, when a linear scale constituting the encoder is not provided in parallel to the moving direction of the laser light irradiation device, or when the linear scale and a sensor section for reading the linear scale are not provided in parallel to each other, because a position of the laser light irradiation device or the moving speed is not exactly detected, it is not correctly controlled as in the case where the speed unevenness is generated in the conveyance by the linear motor of the laser light irradiation device. Accordingly, also in this point, the position dislocation is generated in the irradiation of the laser light to the recording medium, and there is a case where the image unevenness is generated.

Accordingly, the second object of the present invention is to provide a moving device which can smoothly move the moving object while the generation of the speed unevenness of the movement is prevented, by a small size and low cost device structure, and an image reading device and an image forming apparatus by which a very fine image can be obtained by applying this moving device.

### SUMMARY OF THE INVENTION

Above-described problems are solved by one of the following items.
(1) To solve the above-described problems, an image reading device according to the present invention is characterized in that: in an image reading device by which an image is read by moving the moving object composed of any one of a recording medium in which the image is recorded, and a reading section for reading the image recorded in the recording medium, to the other, a linear motor for straightly moving the moving object, which is composed of a magnet section and movable coil, is provided, and the magnet section is formed into shaft-like extending in the moving direction.
   When the magnet section is formed into shaft-like, and the peripheral surface of the shaft-like magnet section is covered by the movable coil, the movable coil becomes a shape by which the rigidity can be easily obtained. Accordingly, the movable coil is not made larger than a necessary one, and it can be prevented that the delay of the moving speed to the conveying speed of the linear motor is generated, and the vibration is not generated, and the recording medium or reading section is smoothly conveyed.
   Further, when the peripheral surface of the shaft-like magnet section is covered by the moving coil, the using efficiency of the magnetic flux is good, and also when it is wanted that the large thrust is obtained, it is not necessary that the dimension of the magnet section is increased more than it needs.
(2) In the image reading device written in item 1, it is characterized in that: a guide section for guiding the straight movement of the moving object is provided.
   According to the invention written in item 2, because the guide section for guiding the straight movement of the moving object is provided, the recording medium or the reading section, which is the moving object, is stably conveyed.
(3) In the image reading device written in item 2, it is characterized in that:: the guide section is a singular.
   According to the invention written in item 3, more size-reduction and cost reduction of the whole device can be intended.
(4) In the image reading device written in any one from item 1 to item 3, it is characterized in that: the movement direction is a vertical direction.
   According to the invention written in item 4, even when the movement direction is a vertical direction, it is prevented that the movable coil is made larger than it needs, and the delay of the moving speed is generated to the conveying speed of the linear motor, and the recording medium or reading section is smoothly conveyed without generation of the vibration.
   Further, when the peripheral surface of the shaft-like magnet section is covered by the movable coil, the using efficiency of the magnetic flux is good, and even when it is wanted that the large thrust is obtained, it is not necessary that the dimension of the magnet section is made larger than it needs.
(5) In the image reading device written in item 4, it is characterized in that: when the moving body which holds the moving object and moves and a balancing weight for balancing with the moving body, are provided and a connecting member which connects the moving body and the balancing weight is provided, and the moving body is straightly moved by the linear motor, and the balancing weight is relatively moved with the moving body.
   According to the invention written in item 5, when the moving body is risen by the linear motor, because the balancing weight is dropped by the self weight, the thrust by the linear motor can be decreased.
(6) In the image reading device written in item 5, it is characterized in that: when the drive of linear motor is stopped, it is provided with a brake mechanism for preventing the self-weight dropping of the moving body or balancing weight.
   According to the invention written in item 6, when the drive of linear motor is stopped, it can be prevented that the moving body or balancing weight is dropped by the self-weight.
(7) In an image forming apparatus by which the image is formed by moving the moving object composed of any one of the recording medium and the recording section for recording the image in the recording medium to the other, it is characterized in that: the linear motor which is composed of the magnet section and the moving coil, and which straightly moves the moving object, is provided, and the magnet section is formed into shaft-like extending in the moving direction.
   According to the invention written in item 7, because the magnet section is shaft-like, it is sufficient when the peripheral surface of the shaft-like magnet section is covered by the movable coil, and the movable coil becomes a shape by which the rigidity can be easily obtained. Accordingly, it is not necessary that the size of movable coil is increased more than it needs, and it can be prevented that the delay is generated in the moving body to the conveying speed of the linear motor, and the recording medium or recording section is smoothly conveyed without generating the vibration.
   Further, when the peripheral surface of the shaft-like magnet section is covered by the movable coil, the using efficiency of the magnetic flux is good, and even when it is wanted that the large thrust is obtained, it comes off without making the dimension of the magnet section larger than it needs.
(8) In the image forming apparatus written in item 7, it is characterized in that: a guide section for guiding the straight movement of the moving object is provided.
   According to the invention written in item 8, because the guide section for guiding the straight movement of the moving object is provided, the recording medium or recording section, which is the moving object, is stably conveyed.
(9) In the image forming apparatus written in item 8, it is characterized in that: the guide section is a singular.
   According to the invention written in item 9, more size-reduction and cost reduction of the whole apparatus can be intended.
(10) In the image forming apparatus written in any one item from item 7 to item 9, it is characterized in that: the moving direction is a vertical direction.
   According to the invention written in item 10, even when the moving direction is a vertical direction, without making the movable coil larger than it needs, it is prevented that the delay is generated in the moving body to the conveying speed of the linear motor, and without the generation of the vibration, the recording medium or recording section is smoothly conveyed.
   Further, when the peripheral surface of the shaft-like magnetic section is covered by the movable coil, the using efficiency of the magnetic flux is good, and even when it is wanted that the large thrust is obtained, it comes off without making the dimension of the magnet section larger than it needs.
(11) In the image forming apparatus written in item 10, it is characterized in that: the balancing weight for balancing the moving body which holds the moving object and moves, and the balancing weight for balancing the moving body are provided; the connecting member for connecting the moving body and the balancing weight is provided; the moving body is straightly moved by the linear motor; and the balancing weight is relatively moved to the moving body.
   According to the invention written in item 11, when the moving body is risen by the linear motor, because the balancing weight is dropped by the self-weight, the thrust by the linear motor can be decreased.
(12) In the image forming apparatus written in item 11, it is characterized in that: it is provided with a brake mechanism for preventing the self-weight dropping of the moving body or the balancing weight when the drive of the linear motor is stopped.
   According to the invention written in item 1, when the drive of the linear motor is stopped, it can be prevented that the moving body or the balancing weight is dropped by the self-weight.
(13) In order to solve the above second problem, the moving device according to the present invention is characterized in that: it is provided with a linear motor structured by a shaft-like magnet section in which a plurality of magnets are arranged, and a movable coil, as a drive source by which the moving object is straightly moved; a guide member for guiding the straight movement of the moving object is provided; and the linear motor and the guide member are arranged in a row along the direction perpendicular to the moving direction of the moving object.
   When the magnet section is structured in such a manner that the magnet section is made shaft-like, and the peripheral surface of the shaft-like magnet section is covered by the movable coil, the movable coil becomes a shape by which the rigidity is easily obtained. Thereby, without making the size of the movable coil larger than it needs, it can be prevented that delay of the moving speed is generated to the conveying speed of the linear motor, and in addition to this, the vibration is decreased and the moving object is smoothly conveyed.
   Further, because the linear motor and the guide member are arranged in a row along the direction perpendicular to the moving direction of the moving object, the balance in the direction perpendicular to the moving direction is good, further, because each of components is provided in close proximity, and the influence of the assembling accuracy of each component is hardly affected, the speed unevenness when the moving operation is conducted, is decreased.
(14) In the moving device written in item 13, it is characterized in that: in the magnet section, a linear scale constituting an encoder for detecting a position or the moving speed of the moving object is provided; and on one end of the movable coil, a sensor section constituting the encoder and reading the linear scale, is provided.
   According to the invention written in item 14, because the linear motor, guide member and encoder are arranged in a row along the direction perpendicular to the moving direction of the moving object, the balance in the direction perpendicular to the moving direction is good, further, because each of components is provided in close proximity, the influence of the assembling accuracy of each component is hardly affected, therefore, the speed unevenness when the moving operation is conducted, is decreased.
   Further, because the sensor section is provided directly to the movable coil for moving the moving object, a position or moving speed of the moving object is accurately detected.
(15) In the moving device written in item 13 or item 14, it is characterized in that: a holding section for holding the moving object is provided to the movable coil, and the holding section and the magnet section are arranged at a distance longer than the pitch length of the magnet.
   According to the invention written in item 15, because the holding section and magnet section is arranged at a distance longer than the pitch length of the magnet, and the holding section is hardly affected by the influence of the magnetic field formed of the magnet section, even when the magnetic substance is used in the holding section, when the moving operation is conducted, there is no case where it is attracted to the magnet section, and the speed unevenness is decreased.
(16) In the moving device written in any one from item 13 to item 15, it is characterized in that: a guided member guided by the guide member is provided to the movable coil; and the guided member and the magnet section are arranged at a distance longer than the pitch length of the magnet.
   According to the invention written in item 16, because the guided member and magnet section is arranged at a distance longer than the pitch of the magnet, and the guided member is hardly affected by the influence of the magnetic field formed of the magnet section, even when the magnetic substance is used in the guided member, when the moving operation is conducted, there is no case where it is attracted to the magnet section, and the speed unevenness is decreased.
(17) In the moving device written in any one from items 13 to 16, it is characterized in that: the moving direction of the moving object is a vertical direction.
   According to the invention written in item 17, even when the moving operation is conducted in the vertical direction, the speed unevenness is decreased.
(18) In the moving device written in item 17, it is characterized in that: it has the moving body which holds the moving object and moves against the magnet section; the balancing weight balancing with the moving body, and a connecting member for connecting the holding section to the balancing weight, are provided; the moving body and the balancing weight are arranged in a row along the direction perpendicular to the moving direction of the moving object; and the balancing weight relatively moves to the moving body.
   According to the invention written in item 18, when the moving body is risen by the linear motor, because the balancing weight is dropped by the self-weight, the thrust by a linear motor can be decreased.
(19) It is characterized in that: as a drive source for straightly moving the moving object, a linear motor structured by a shaft-like magnet section in which a plurality of magnets are arranged, and a movable coil, is provided; a positioning member by which, on a fitting surface of a linear scale for detecting a position or moving speed of the moving object, one side surface of the linear scale is brought into contact with it, and the fitting position is determined, is provided; and on the positioning member, a contact surface of the linear scale is curvedly formed.
   According to the invention written in item 19, because a positioning member for determining the fitting position of the linear scale is provided, one side surface of the linear scale is brought into contact with the positioning member, and when the linear scale is rotated along the curved surface of the positioning member around this contact position, and the fitting position is adjusted so that the linear scale is parallel to the moving direction of the moving object, and it is parallel to the sensor section in the width direction, and it is fitted to the fitting surface. Thereby, a position or moving speed of the moving object is accurately detected, and the speed unevenness is suppressed.
(20) In the moving device, it is characterized in that: it is provided with a linear motor structured by a shaft-like magnet section in which a plurality of magnets are arranged, and the movable coil; on a fitting surface of a sensor section for reading a linear scale for detecting a position or moving speed of the moving object, a positioning member by which an opposite side surface to the surface opposite to the linear scale of the sensor section is brought into contact with and the fitting position is determined, is provided; and on the positioning member, the contact surface of the sensor section is curvedly formed.
   According to the invention written in item 20, because a positioning member for determining the fitting position of the sensor section is provided, the surface opposite to the surface facing the linear scale of the sensor section, is brought into contact with the positioning member, and when the sensor section is rotated along the curved surface of the positioning member around this contact position, the fitting position is adjusted so that the opposite surface to the linear scale of the sensor section is parallel to the linear scale, and it is fitted to the fitting surface. Thereby, the position or moving speed of the moving object is exactly detected, and the speed unevenness is suppressed.
(21) In the image reading device, it is characterized in that: in the image reading device by which any one of a recording medium or a reading section by which the image recorded in the recording medium is read, is moved to the other, and the image is read, it is provided with the moving device written in any one from items 13 to 21; and the moving object is any one of the recording medium or the reading section.
   According to the invention written in item 21, because, by the moving device in which the speed unevenness is decreased at the time of moving operation, the recording medium or reading section, which is the moving object, is conveyed, the scanning of the recording medium or reading section is smoothly conducted.
(22) In the image forming apparatus by which any one of the recording medium and the recording section by which an image is recorded in the recording medium, is moved to the other one, and the image is formed, it is characterized in that: it is provided with the moving device written in any one from items 13 to 20, and the moving object is any one of the recording medium and the recording section.

According to the invention written in item 22, by the moving device in which the speed unevenness at the time of moving operation is decreased, because the recording medium or the recording section, which is the moving object, is conveyed, the scanning of the recording medium or the recording section is smoothly conducted.

Following is the effects of each embodiments stated above.

According to the invention written in item 1, when the movable coil is fixed in the apparatus, it becomes a shape by which the rigidity is easily obtained, and because, without making the movable coil larger than it needs, it is prevented that the delay of the moving speed is generated to the conveying speed of the linear motor, the vibration is not generated, and the recording medium or the reading section is smoothly conveyed, thereby, the very fine image can be obtained by a small-sized and low cost apparatus structure.

Further, when the peripheral surface of shaft-like magnet section is covered by the movable coil, the using efficiency of the magnetic flux is good, and even when it is wanted that the large thrust is obtained, because it comes off without making the dimension of the magnet section larger than it needs, the size reduction and cost reduction of the apparatus can be intended.

According to the invention written in item 2, because the guide section for guiding the moving object is provided, and because the recording medium or reading section, which is the moving object, is more smoothly conveyed, further very fine image can be obtained.

According to the invention written in item 3, because the guide section is singular, more size reduction and cost reduction of the whole apparatus can be intended.

According to the invention written in item 4, even when the moving direction is a vertical direction, without making the movable coil larger than it needs, it is prevented that the delay of the moving speed is generated to the conveying speed of the linear motor, and because, without the generation of the vibration, the recording medium or reading section is smoothly conveyed, a very fine image can be obtained by the small size and low cost apparatus structure.

Further, when the peripheral surface of the shaft-like magnet section is covered by the movable coil, the using efficiency of the magnetic flux is good, and even when it is wanted that the large thrust is obtained, because it comes off without making the dimension of the magnet section larger than it needs, the size reduction and cost reduction of the apparatus can be intended.

According to the invention written in item 5, when the moving body is risen by the linear motor, because the balancing weight is dropped by the self-weight, and the thrust by the linear motor can be decreased, the magnet section and the movable coil can be more size-reduced, thereby, the size reduction and the cost reduction of the apparatus can be intended.

According to the invention written in item 6, when the drive of the linear motor is stopped, it can be prevented that the moving body or the balancing weight is dropped by the self-weight.

According to the invention written in item 7, when the movable coil is fixed in the apparatus, it becomes a shape by which the rigidity can be easily obtained, and without making the dimension of the movable coil larger than it needs, it is prevented that the delay of the moving speed is generated to the conveying speed of the linear motor, and because, without the generation of the vibration, the recording medium or the recording section is smoothly conveyed, a very fine image can be obtained by the small sized and low cost apparatus structure.

Further, when the peripheral surface of the shaft-like magnet section is covered by the movable coil, the using efficiency of the magnetic flux is good, and even when it is wanted that the large thrust is obtained, because it comes off without making the dimension of the magnet section larger than it needs, the size reduction and cost reduction of the apparatus can be intended.

According to the invention written in item 8, because the guide section for guiding the moving object is provided, and the recording medium or reading section, which is the moving object, is more smoothly conveyed, further very fine image can be obtained.

According to the invention written in item 9, because the guide section is singular, more size reduction and cost reduction of the whole apparatus can be intended. Also, it becomes possible to suppress speed unevenness generated by the delay of conveyance speed and the vibration caused by the differences of the mechanical sliding resistances of two guide members by introducing one guide member structure.

According to the invention written in item 10, even when the moving direction is a vertical direction, without making the movable coil larger than it needs, it is prevented that the delay of the moving speed is generated to the conveying speed of the linear motor, and because, without the generation of the vibration, the recording medium or reading section is smoothly conveyed, a very fine image can be obtained by the small size and low cost apparatus structure.

Further, when the peripheral surface of the shaft-like magnet section is covered by the movable coil, the using efficiency of the magnetic flux is good, and even when it is wanted that the large thrust is obtained, because it comes off without making the dimension of the magnet section larger than it needs, the size reduction and cost reduction of the apparatus can be intended.

According to the invention written in item 11, when the moving body is risen by the linear motor, because the balancing weight is dropped by the self-weight, and the thrust by the linear motor can be decreased, a size of the magnet section and movable coil can be more reduced, and therefore, the size reduction and cost reduction of the apparatus can be intended.

According to the invention written in item 12, when the drive of the linear motor is stopped, it can be prevented that the moving body or the balancing weight is dropped by the self-weight.

According to the invention written in item 13, because the movable coil becomes a shape by which the rigidity is easily obtained, by the small sized and low cost apparatus structure, it is prevented that the delay of the moving speed is generated to the conveying speed of the linear motor, and the vibration is decreased, and the moving object can be smoothly conveyed.

Further, because the linear motor and the guide member are arranged in a row along the direction perpendicular to the moving direction of the moving object, and the balance in the direction perpendicular to the moving direction is good, further, each of components is proximately provided, the influence of the assembling accuracy of each component is hardly affected, and because the speed unevenness when the moving operation is conducted, is decreased, the moving object can be smoothly moved.

According to the invention written in item 14, because the linear motor, the guide member and the encoder are arranged in a row along the direction perpendicular to the moving direction of the moving object, and the balance in the direction perpendicular to the moving direction is good, further, because each of components is proximately provided, the influence of the assembling accuracy of each component is hardly affected, and because the speed unevenness when the moving operation is conducted, is decreased, the moving object can be smoothly moved.

Further, because the sensor section is directly provided to the movable coil for moving the moving object, and a position or the moving speed of the moving object is accurately detected, the speed unevenness of the moving object is suppressed and correctly controlled, and at this result, the moving object can be smoothly moved.

According to the invention written in item 15, because the holding section is hardly affected by the magnetic field formed of the magnet section, even when the magnetic substance is used in the holding section, when the moving operation is conducted, because there is no case where it is attracted to the magnet section, the speed unevenness of the movement is suppressed, and as this result, the moving object can be smoothly moved.

According to the invention written in item 16, because the guided member is hardly affected by the magnetic field formed of the magnet section, even when the magnetic substance is used in the guided member, when the moving operation is conducted, because there is no case where it is attracted to the magnet section, the speed unevenness of the movement is suppressed, and as this result, the moving object can be smoothly moved.

According to the invention written in item 17, even when the moving operation is conducted in the vertical direction, the speed unevenness is decreased, and the moving object can be smoothly moved.

According to the invention written in item 18, when the moving object is risen by the linear motor, because the balancing weight is dropped by the self-weight, the thrust by the linear motor can be decreased.

According to the invention written in item 19, because the linear scale is parallel to the moving direction of the moving object, by the positioning member, and is fitted to the fitting surface so that it is parallel in the width direction to the sensor section, and a position or the moving speed of the moving object is correctly detected, the speed unevenness is suppressed, and the moving object can be smoothly moved.

According to the invention written in item 20, because the sensor section is fitted to the fitting surface so that the opposite surface to the linear scale of the sensor section is parallel to the linear scale, and a position or the moving speed of the moving object is correctly detected, the speed unevenness is suppressed and the moving object can be smoothly moved.

According to the invention written in item 21, because, by the moving device in which the speed unevenness is decreased at the time of moving operation, the recording medium or reading section, which is the moving object, is conveyed, the scanning of the recording medium or reading section is smoothly conducted, as this result, a very fine image can be obtained.

According to the invention written in item 22, because, by the moving device in which the speed unevenness is decreased at the time of moving operation, the recording medium or reading and recording section, which is the moving object, is conveyed, the scanning of the recording medium or recording section is smoothly conducted, and as this result, a very fine image can be obtained.

### BRIEF DESCRIPTION OF THE DRAWINGS

Fig. 1 is a view showing the structure of an embodiment of an image reading device according to the present invention.
Fig. 2 is a perspective view showing a conveying mechanism of a linear motor part.
Fig. 3 is a plan view showing a conveying mechanism of a linear motor part.
Fig. 4 is a perspective view showing the structure of an encoder in the third embodiment.
Fig. 5 is a plan view showing the structure of an encoder in the third embodiment.
Fig. 6 is a view showing the structure of an embodiment of an image forming apparatus according to the present invention.
Fig. 7 is a perspective view showing a fitting method of a linear scale in the fourth embodiment.
Fig. 8 is a perspective view showing a fitting method of a sensor section in the fourth embodiment.

### DETAILED DESCRIPTION OF THE INVENTION

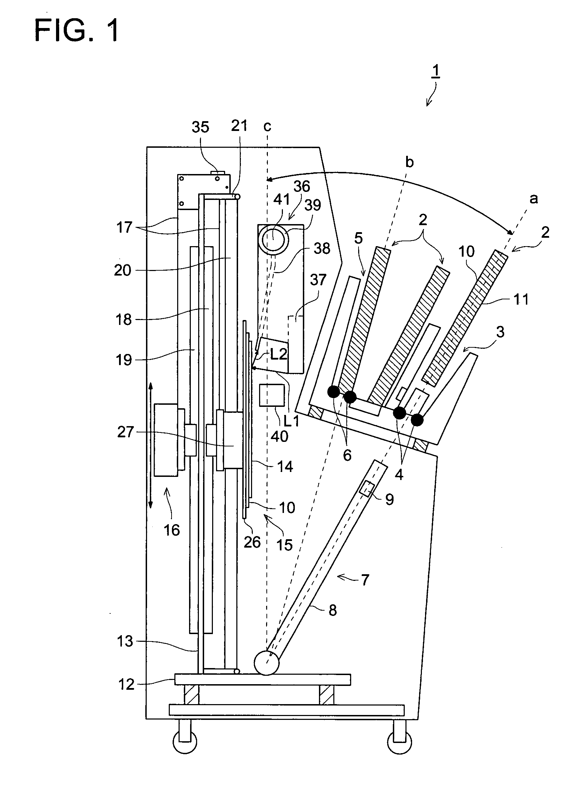

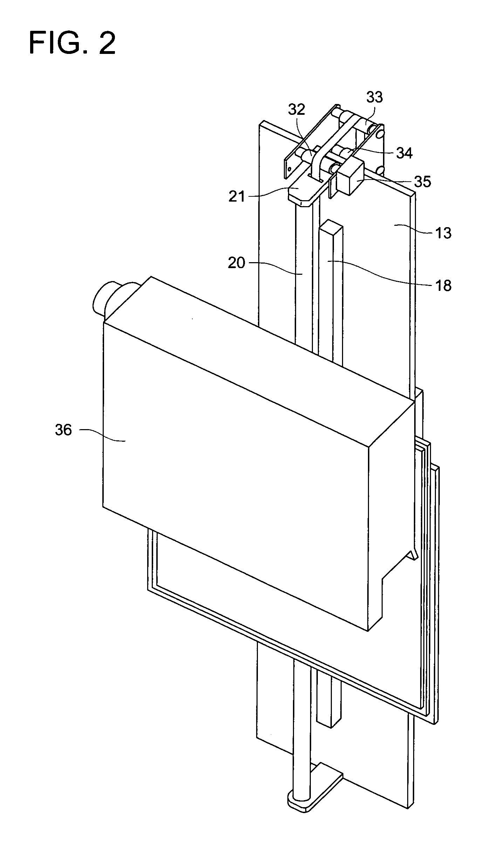

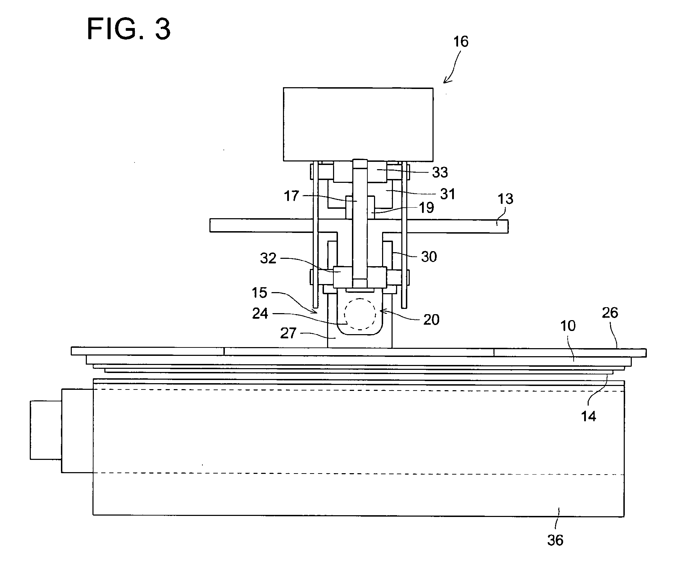

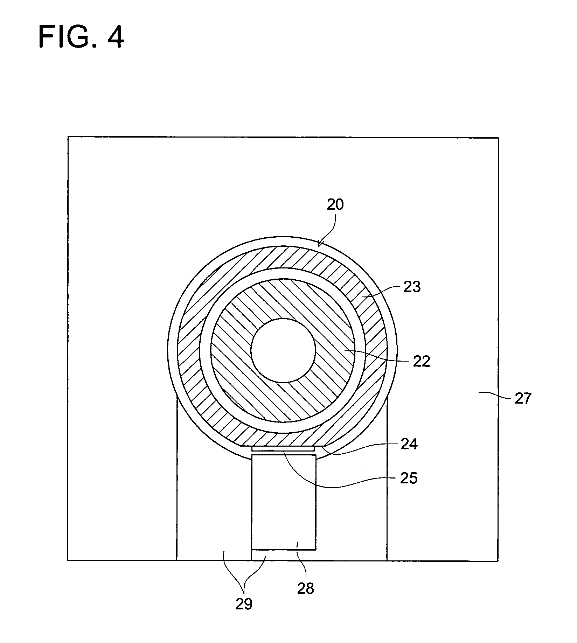

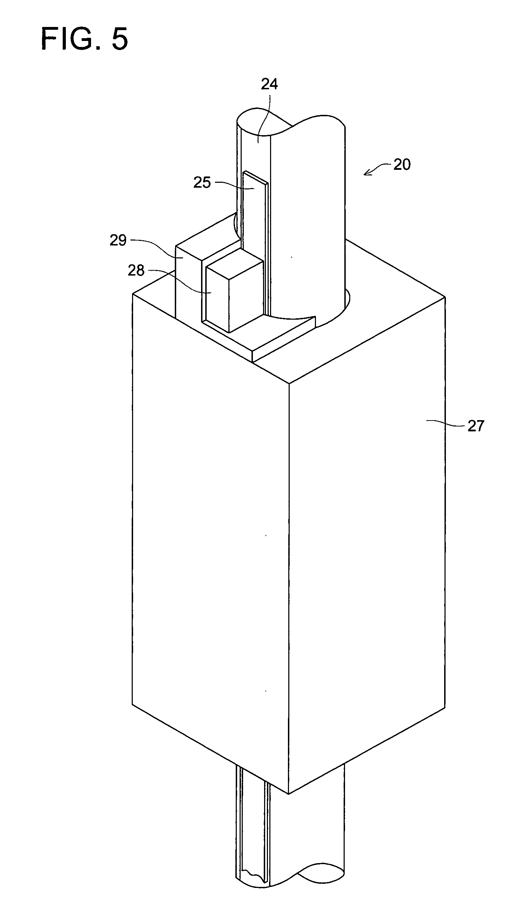

Referring from Fig. 1 to Fig. 3, the first embodiment of the invention will be described below, and referring to Fig. 4 and Fig. 5, the third embodiment will be described, and their operations will be individually described later.

Fig. 1 is a view in which an embodiment of an image reading device 1 according to the present invention is shown, and on an upper portion of the front side of this image reading device 1, an insertion inlet 3 into which a cassette 2 in which a stimulative fluorescent substance sheet 14 as a recording medium in which an image is recorded is housed, is inserted, is provided, and on a lower end portion of this insertion inlet 3, a feeding roller 4 for feeding the cassette 2 into the inside of the image reading device 1 is provided.

On an upper portion of the front side of the image reading device 1, and furthermore, on a rear portion of the insertion inlet 3, a take-out opening 5 for taking out the reading processed cassette 2 is provided, and on the lower end portion of this take-out opening 5, a sending roller 6 for sending the cassette 2 to the outside of the image reading device 1, is provided.

On the lower portion of the front side of the image reading device 1, a cassette conveying device 7 for conveying the cassette 2 to a predetermined position is rotatably provided by making the lower end a support shaft, by a drive mechanism, not shown, and it can be stopped at each position of a position a corresponding to the insertion inlet 3, a position b corresponding to the take-out opening 5, and a position c at which the cassette 2 is almost vertical.

The cassette conveying device 7 has a box-like cassette supporting section 8 in which the upper surface and the rear surface are opened, and in the cassette supporting section 8, an elevation table 9 by which the lower end portion of the cassette 2 is supported and which can be risen and fallen is provided.

Further, in the cassette supporting section 8, a lock releasing mechanism (not shown) by which the cassette 2 can be separated into a back plate 10 by which the stimulative fluorescent substance sheet 14 is held from the rear surface, and a front plate 11 by which the surface of the stimulative fluorescent substance sheet 14 is covered, is provided. As the lock releasing mechanism, for example, a lock releasing mechanism disclosed in Tokkai 2002-278000, can be used.

On the rear surface side of the image reading device 1, a plate-like supporting member 13 extending from a base table 12 to the vertical direction, is provided, and by the supporting member 13, a moving body 15 which holds the stimulative fluorescent substance sheet 14 and can move in the vertical direction, and a balancing weight 16 balancing with this moving body 15, are supported relatively in a manner which can go up and down through a connecting member 17.

At the center of front surface of the supporting member 13, as shown in from Fig. 1 to Fig. 3, the first guide rail 18 as a guide member for guiding the moving body 15 in the vertical direction, is provided, and at the center of rear surface, the second guide rail 19 for guiding the balancing weight 16 in the vertical direction, is provided.

At a position opposite to the first guide rail 18, a magnet section 20 constituting the linear motor is supported by a supporting piece 21 integrally formed with the supporting member 13 and provided in a extending manner in the vertical direction. The magnet section 20 has, As shown in Fig. 4, a permanent magnet 22 whose section is cylindrical, in which mutual N poles or S poles are connected and which is formed into shaft-like, and on the peripheral surface of this permanent magnet 22, a covering member 23 formed of nonmagnetic material covering the permanent magnet 22, is provided.

On the peripheral surface of this covering member 23, as shown in Fig. 4 and Fig. 5, a flat portion 24 which is flat in a predetermined length in the peripheral direction, is formed extending in the axis direction, and on this flat portion 24, a linear scale 25 constituting the encoder for detecting a position or the moving speed of the moving body 15 is provided in an extending manner in the axial direction of the magnet section 20.

The moving body 15 has, as shown in from Fig. 1 to Fig. 3, a plate-like holding section 26 holding a back plate 10 of the cassette 2 which supports the stimulative fluorescent substance sheet 14. On the surface of this holding section 26, a rubber-magnet is provided, and the back plate 10 of the cassette 2 is structured in such a manner that, to the main body formed of synthetic resins, a ferromagnetic substance sheet is adhered, and thereby, the back plate 10 is adhered to the holding section 26 by the magnetic force, and held.

At a position which is the rear surface center of the holding section 26, and corresponding to the magnet section 20, a movable coil 27 constituting the linear motor is provided, and this movable coil 27 has a coil which is cylindrically formed, and this coil is covered by a box-shaped cover member. Then, the linear motor is structured in such a manner that the magnet section 20 penetrates the center of the movable coil 27.

At a position which is the upper surface of the movable coil 27, and opposite to the linear scale 25, as shown in Fig. 4 and Fig. 5, a sensor section 28 for constituting the encoder and for reading the linear scale 25, is provided by being supported by the supporting section 29 integrally molded with the movable coil 27.

On the surface of the movable coil 27 opposite to a fitting surface of the holding section, as shown in Fig. 1, the first guided member 30 whose section is C-shaped, guided by the first guide rail 18, is integrally provided with the movable coil 27. The first guided member 30 and the magnet section 20 are arranged at a distance more than a pitch length of the permanent magnet 22.

Further, the balancing weight 16 has the second guided member 31 whose section is C-shaped, guided by the second guide rail 19.

Hereupon, the moving body 15 represents a movable member to the magnet section 20, and in the present embodiment, it is structured by the movable coil 27, holding section 26, first guided member 30 and sensor section 28.

On the front side upper the supporting member 13, the first pulley 32 is provided, and on the rear side, the second pulley 33 and the third pulley 34 are provided upper and lower it. Across these pulleys 32, 33, 34, belt-like connecting member 17 is put. Hereupon, as the connecting member 17, a steal wire can also be used.

Further, on the shaft portion of the first pulley 32, a torque limiter for stopping the rotation operation of the first pulley 32, one-way clutch, a brake mechanism 35 such as an electromagnetic brake, are provided.

At a position which is an upper portion of the movable range of the moving body and opposite to the moving body 15, a reading section 36 for reading the radiation energy which is accumulated and recorded in the stimulative fluorescent substance sheet 14 held by the moving body 15, is provided.

The reading section 36 has: a laser light irradiation device 37 by which a laser light L1 is irradiated on the stimulative fluorescent substance sheet 14 while making the laser light scan in the direction perpendicular to the moving direction of the moving body 15; a light guiding plate 38 by which the stimulative emitting light L2 excited when the laser light L1 is irradiated on the stimulative fluorescent substance sheet 14 by the laser light irradiation device 37, is guided; a light collecting tube 39 for light-collecting the stimulative emitting light L2 guided by the light guiding plate 38; and a photoelectric converter 41 by which the stimulative emitting light L2 light-collected by the light collecting tube 39 is converted into an electric signal.

Below the reading section 36, an erasing device 40 for irradiating an erasing light on the stimulative fluorescent substance sheet 14 for discharging the radiation energy remained on the stimulative fluorescent substance sheet 14, after the radiation energy is reading-processed by the reading section 36, is provided.

Next, operations of the first embodiment will be described.

When the reading processing of the image is conducted, the cassette conveying device 7 is made to stand ready for at a psosition a corresponding to the insertion inlet 3, and in this situation, when the cassette 2 in which the cassette 2 in which the stimulative fluorescent substance sheet 14 in which the radiation image is recorded is housed, is inserted from the insertion inlet 3, the cassette 2 is sent into the cassette conveying device 7 by the feeding roller 4. Then, the elevation table 9 is lowered under a condition that the lower end portion of the cassette 2 is supported, the cassette 2 is housed in the cassette conveying device 7, and when the lock release mechanism is operated, the cassette 2 is in a condition that it can be separated into the front plate 11 and the back plate 10 by which the stimulative fluorescent substance sheet 14 is held.

After that, the cassette conveying device 7 is moved to a position c at which the cassette 2 is almost vertical. At this time, when the moving body is positioned at the undermost end of movable range, it becomes a condition that the holding section 26 and the back plate 10 of the cassette 2 are opposed to each other, and by the magnetic force, the back plate 10 by which the stimulative fluorescent substance sheet 14 is supported, is attracted to the holding section 26, and is separated from the front plate 11 and under the condition that the surface of the stimulative fluorescent substance sheet 14 is exposed, it is held by the holding section 26. Hereupon, the cassette conveying device 7 may be retreated at a position b corresponding to the taking out opening 5 under the condition that the front plate 11 is held by it.

After that, the linear motor is driven, and the moving body 15 is risen along the first guide rail 18. Thereby, the stimulative fluorescent substance sheet 14 is conveyed to a position opposite to the reading section 36, the laser light L1 is scanned by the laser light irradiation device 37, the stimulative emitting light L2 excited by this, is collected into the light collecting tube 39 by being guided by the light guiding plate 38, and is converted into an electric signal by the photoelectric converter 41.

Herein, because the magnet section 20 is formed into shaft-like, the movable coil 27 is formed into a shape in which the cylindrically formed coil is covered by a box-shaped cover member, and into a shape in which the rigidity is high for being fixed on the holding section 26. Accordingly, without making the movable coil larger than it needs, it can be prevented that the delay is generated in the moving body 15 to the conveying speed of the linear motor, and without generating the vibration, the stimulative fluorescent substance sheet 14 is smoothly conveyed. Further, because, following the rise of the moving body 15, pulleys 32, 33, 34 are rotated, and the balancing weight 16 is dropped by the self-weight along the second guide rail 19, the thrust by the linear motor can be decreased, and the size of the magnet section and the movable coil can be more reduced.

When the reading processing by the reading section 36 is completed to the lower end portion of the stimulative fluorescent substance sheet 14, the linear motor is stopped. At this time, the rotation of the first pulley 32 is stopped by the brake mechanism 35, and the moving body 15 is stopped under a stable condition.

After that, the linear motor is driven again, and simultaneously when the moving body 15 is lowered along the first guide rail 18, the erasing light is irradiated to the stimulative fluorescent substance sheet 14 by the erasing device 40, thereby, the radiation image remained in the stimulative fluorescent substance sheet 14 is erased.

After that, when the moving body 15 is lowered to the lowermost end of the movable range and stopped, the cassette conveying device 7 is rotated to a position c at which the cassette 2 is almost vertical. Thereby, the lock is conducted under the condition that the back plate 10 and front plate 11 is integrated.

Then, while the cassette conveying device 7 is rotated to a position b corresponding to the taking out opening 5 by a drive mechanism, not shown, when the cassette 2 is separated from the holding section 26, the elevation table 9 is risen, and the feeding roller 6 is actuated, the cassette 2 is taken from the taking out opening 5.

From the above description, according to the present embodiment, for the purpose of fixing the movable coil 27 on the holding section 26, it becomes a shape by which the rigidity is easily obtained, and without making the movable coil 27 larger than it needs, it is presented that the delay is generated in the moving body 15 to the conveying speed of the linear motor, and because, without generation of the vibration, the recording medium or recording section is smoothly conveyed, by the small sized and low cost device structure, a very fine image can be obtained.

Further, because it is structured in such a manner that the shaft-like magnet section 20 penetrates the movable coil 27 which is formed cylindrically, the using efficiency of the magnetic flux is good, and even when it is wanted that the large thrust is obtained, because it comes off without making the dimension of magnet section 20 larger than it needs, the size reduction and cost reduction of the device can be intended.

Further, when the moving body 15 is risen by the linear motor, because the balancing weight 16 is dropped by the self-weight, the thrust by the linear motor can be decreased, therefore, the size of the magnet section 20 and the movable coil 27 can be reduced, thereby, the size reduction and cost reduction of the device can be intended.

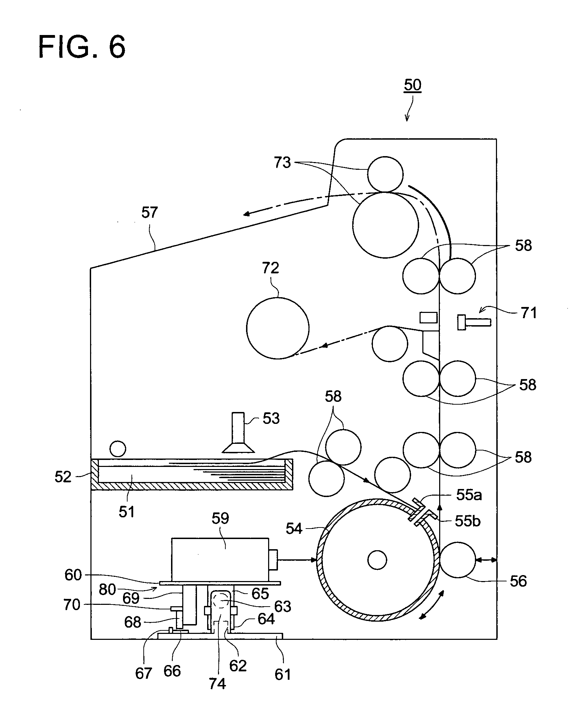

Next, referring to Fig. 6, the second embodiment of the present invention will be described.

Fig. 6 is a view showing an embodiment of the image forming apparatus 50 according to the present invention, and in this image forming apparatus 50, an accommodation tray 52 in which a plurality of recording media 51 are hosed in the laminating manner, is provided, and on the upper side of one end portion of this accommodation tray 52, a taking out device 53 by which the recording media 51 in which the image is to be recorded, are taken one by one from the accommodation tray 52, is provided.

Hereupon, as the recording medium 51, a recording medium 51 which is formed of the first sheet having a color material layer and the second sheet having a base layer, which generates abrasion of the material between the color material layer and the base layer when the laser light is irradiated, and in which the image can be formed when the color material layer is transferred onto the second sheet, is applied.

On the lower side portion of this accommodation tray 52, a cylindrical supporting drum 54 supporting the recording medium 51, is rotatably arranged, and this supporting drum 54 is rotated by the drum drive mechanism. Further, on the peripheral surface of the supporting drum 54, a gripper 55a for gripping the leading edge portion of the recording medium 51 over all width, and a gripper 55b for gripping the trailing edge portion of the recording medium 51 over all width, are provided in an extending manner in the shaft direction of the supporting drum 54.

On the side portion of the supporting drum 54, a driven roller 56 which is driven-rotated in a slidingly contacted manner with the supporting drum 54, is provided in a contactable and separable manner to the supporting drum 54.

In the upper portion of the image forming apparatus 50, a delivery tray 57 for delivering the recording medium 51 in which the image is recorded, is provided.

Inside the image forming apparatus 50, a conveying path by which the recording medium 51 supplied from the accommodation tray 52 is conveyed to the upper portion of the peripheral surface of the supporting drum 54, and after the recording medium 51 is conveyed along the peripheral surface of the supporting drum 54, it is delivered from the upper portion of the peripheral surface of the supporting drum 54 to the delivery tray 57, is provided. At predetermined positions of this conveying path, a plurality of pairs of conveying rollers 58 for conveying the recording medium 51 in the conveying direction are provided.

On the side portion of the peripheral surface of the supporting drum 54, a laser light irradiation device 59 as the recording section by which the laser light is irradiated to the recording medium 51 supported by the supporting drum 54, is provided, and in the lower portion of the laser light irradiation device 59, a moving body 80 by which the laser light irradiation device 59 is held and is reciprocally movable in the direction perpendicular to the conveying direction of the recording medium 51 by the linear motor, is provided.

In the lower portion of the moving body 80, a plate-like supporting member 61 extending in the direction perpendicular to the conveying direction of the recording medium 51, is provided, and at almost center of the upper surface of this supporting member, a guide rail 62 as a guiding section for guiding the moving body 80 in the width direction of the recording medium 51, is provided.

The moving body 80 has a plate-like holding section 60 for holding the laser light irradiation device 59. On the rear surface of this holding section 60, a fitting member 69 is provided, and on the surface opposite to the holding section fitting surface of this fitting member 69, a guided member 55 whose section is a c-shape, which is guided by the guide rail 62, is integrally provided with the fitting member 69.

On the one side of the fitting member 69, a magnet section 63 constituting a linear motor, is supported by a supporting piece 74 integrally formed with a supporting member 61, and is provided extending in the direction perpendicular to the conveying direction of the recording medium 51. The magnet section 63 is structured in such a manner that a plurality of mutual N poles or S poles of the permanent magnet whose section is circular, are connected, and is formed into shaft-like.

On the one hand, on the side portion of the fitting member 69, a movable coil 65 constituting the linear motor is provided. The movable coil 65 has a coil formed cylindrically, and the coil is covered by a box-like cover member. Then, the linear motor is structured in such a manner that the magnet section 63 penetrates the center of the movable coil 65.

On the upper surface of the supporting member 61 and on the opposite side to the magnet section 63 with the guide rail 62 between them, a linear scale 66 constituting the encoder for detecting a position or moving speed of the moving body 80, is provided extending in the width direction of the recording medium 51. Further, on the position opposite to the linear scale 66 of the holding section 60, a sensor section 68 which structures the encoder and reads the linear scale 66, is provided.

On the downstream side of the conveying path from the supporting drum 54, a peeling device 71 by which the first sheet and the second sheet of the recording media 51 exposed by the laser light irradiation device 59 are peeled, is provided, and lower the delivery tray 57, a collecting roller 72 by which the first sheet peeled from the second sheet by the peeling device 71 is wound and collected, is provided. Further, on the downstream side of the conveying path from the peeling device 71, a delivery roller 73 for delivering the second sheet on which the image is formed onto the delivery tray 57, is provided.

Next, operations of the second embodiment will be described.

When the image information is sent to the image forming apparatus 50, the taking out device is actuated, and takes out the uppermost recording medium 51 housed in the accommodation tray 52, and the conveying roller 58 is rotated, and conveys this taken out recording medium 51.

When the recording medium 51 is arrived in the vicinity of the peripheral surface of the upper portion of the supporting drum 54, the supporting drum 54 is rotated clockwise in Fig. 6, under the condition that the leading edge portion of the recording medium 51 is gripped by the gripper 55a. Following the rotation of the supporting drum 54, when the gripper 55a passes the position of the driven roller 56, the driven roller 56 is brought into contact with the supporting drum 54, and the recording medium 51 is held on the peripheral surface of the supporting drum 54. Then, following the rotation of the supporting drum 54, the gripper 55b is moved to a position of the trailing edge portion of the recording medium 51, and when the trailing edge portion of the recording medium 51 is gripped, the driven roller 56 is separated from the supporting drum 54.

After that, the supporting drum 54 is rotated in the opposite direction to the clockwise direction in Fig. 6, when, following the rotation of the supporting drum 54, the recording medium 51 is sent to the position of the laser light irradiation device 59, according to the image information, the laser light is irradiated to the recording medium 51 by the laser light irradiation device 59. At this time, following the reciprocal movement of the moving body 80 in the direction perpendicular to the conveying direction of the recording medium 51 by the drive of linear motor, the laser light is scanned to the recording medium 51.

Herein, because the magnet section 63 is formed into shaft-like, the movable coil 65 is a shape in which the cylindrically formed coil is covered by a box-like cover member, and for fixing it to the holding section 60, it is the shape in which the rigidity is high. Accordingly, without making the movable coil larger than it needs, it can be prevented that the delay is generated in the moving body 80 to the conveying speed of the linear motor, and without the generation of the vibration, the laser light irradiation device 59 can smoothly scan.

When irradiation of the laser light by the laser light irradiation device 59 is completed, the recording medium 51 is conveyed by the conveying roller 58 along the conveying path.

When the recording medium 51 is conveyed to a position of the peeling device 71, it is peeled into the first sheet and the second sheet by the peeling device 71. Then, the first sheet is collected by the collecting roller 72, the second sheet is delivered to the delivery tray 57 by the conveying roller 58 and the delivery roller 73.

From the above-description, according to the present embodiment, the movable coil 65 becomes a shape in which the rigidity is easily obtained when it is fixed to the holding section 60, and without making the movable coil 65 larger than it needs, it is prevented that the delay is generated in the moving body 80 to the conveying speed of the linear motor, and because, without generation of the vibration, the laser light irradiation device 59 is smoothly conveyed, by the small sized and low cost device structure, a very fine image can be obtained.

Further, because it is structured in such a manner that the shaft-like magnet section 63 penetrates the cylindrically formed movable coil 65, the using efficiency of the magnetic flux is good, and even when it is wanted that the large thrust is obtained, because it comes off without making the dimension of the magnet section 63 larger than it needs, the size reduction and cost reduction of the device can be intended.

Next, operations of the third embodiment will be described.

When reading processing of the image is conducted, the cassette conveying device 7 is made standby at a position a corresponding to the insertion inlet 3, and under this condition, when the cassette 2 in which the stimulative fluorescent substance sheet 14 in which the radiation image is recorded, is accommodated is inserted from the insertion inlet 3, by the feeding roller 4, the cassette 2 is sent into the cassette conveying device 7. Then, the elevation table 9 is lowered under a condition that the lower end portion of the cassette 2 is supported, and the cassette 2 is housed in the cassette conveying device 7, and when the lock releasing mechanism is operated, the cassette 2 becomes a situation that it can be separated into the front plate 11 and the back plate 10 holding the stimulative fluorescent substance sheet 14.

After that, the cassette conveying device 7 is made to be moved to a position c at which the cassette 2 is almost vertical. At this time, when the moving body 15 is made to be positioned at the lowermost end of the movable range, it becomes a situation that the moving body 15 is opposite to the back plate 10 of the cassette 2, and by the magnetic force, the back plate 10 supporting the stimulative fluorescent substance sheet 14 is attracted to the moving body 15, separated from the front plate 11, and held by the moving body 15 under a condition that the surface of the stimulative fluorescent substance sheet 14 is exposed. Hereupon, it is allowable when the cassette conveying device 7 is retreated to a position b corresponding to the taking out opening 5 under a condition that the front plate 11 is made to be held.

After that, the linear motor is driven and the moving body 15 is risen along the first guide rail 18. When the stimulative fluorescent substance sheet 14 is conveyed to a position opposite to the reading section 36, the laser light L1 is scanned by the laser light irradiation device 37, and the stimulative emitting light L2 excited thereby, is guided by a light guiding plate 38 and light-collected into the light collecting tube 39, and converted into an electric signal by the photoelectric converter 41.

Herein, because the magnet section 20, movable coil 27, guide rails 18, 19 and guided members 30, 31 are arranged in a row at the center of the holding section 26, and the linear scale 25 is provided to the magnet section 20 and the sensor section 28 is provided to the movable coil 27, the balance in the horizontal direction is good, and because each of components is arranged in close proximity and the influence of assembling accuracy of each component is hardly affected, the speed unevenness to the moving body 15 is decreased, and the stimulative fluorescent substance sheet 14 is smoothly conveyed.

Further, because the magnet section 20 is shaft-like, the movable coil 27 is a shape in which a cylindrical coil is covered by a box-like case member, and because it is a shape in which the rigidity is easily obtained when it is fixed to the holding section 26, the speed unevenness at the time of movement is more decreased.

Further, because the sensor section 28 is directly provided to the movable coil 27 for moving the moving object, and a position or moving speed of the moving object is accurately detected, the movement of moving object is accurately controlled because the speed unevenness is suppressed, and from this, the moving object can be smoothly moved.

Further, because the holding section 26 and the first guided member 30 are provided at a distance more than a pitch length of the permanent magnet 22 from the magnet section 20, the influence of the magnetic field is hardly affected, and there is no case where they are attracted to the magnet section 20 at the time of movement. Therefore, the speed unevenness to the moving body 15 is suppressed and the stimulative fluorescent substance sheet 14 is smoothly conveyed.

When the reading processing to the lower end portion of the stimulative fluorescent substance sheet 14 by the reading section 36 is completed, the linear motor is stopped. At this time, rotation of the first pulley 32 is stopped by the brake mechanism 35, and the moving body 15 is stopped under a stable condition.

After that, the liner motor is driven again, and simultaneously when the moving body 15 is lowered along the first guide rail 18, the erasing light is irradiated to the stimulative fluorescent substance sheet 14 by the easing device 40, thereby, the radiation image remained in the stimulative fluorescent substance sheet 14 is erased.

After that, when the moving body 15 is lowered to the lowermost end of the movable range and stopped, the cassete conveying device 7 is rotated to a position c at which the cassette 2 is almost vertical. Thereby, the lock is conducted under a condition that the back plate 10 and the front plate 11 is integrated.

Then, while the cassette conveying device 7 is rotated to a position b corresponding to the taking out opening 5 by the drive mechanism, not shown, when the cassette 2 is separated from the holding section 26, and the elevation table 9 is risen and the feeding roller 6 is actuated, the cassette 2 is taken from the taking out opening 5.

From the above-description, according to the present embodiment, because the magnet section 20, movable coil 27, guide rails 18, 19, and guided members 30, 31 are arranged in a row at the center of the holding section 26, and the linear scale 25 is provided in the magnet section 20 and the sensor section 28 is provided to the movable coil 27, the balance in the horizontal direction is good, and further, because each of components is arranged in close proximity, and the influence of assembling accuracy of each component is hardly affected, the speed unevenness to the moving body 15 is decreased and the stimulative fluorescent substance sheet 14 is smoothly conveyed, and as this result, a very fine image can be obtained.

Hereupon, although each of components is arranged in close proximity, because the holding section 26 and the first guided member 30 are hardly affected by the influence of the magnetic field formed of the magnet section 20, the holding section 26 and the first guided member 30 are not attracted to the magnet section 20 at the time of movement, and the speed unevenness is suppressed.

Further, because the sensor section 28 is directly provided to the movable coil 27 for moving the moving object and a position or moving speed of the moving object is accurately detected, and also because the speed unevenness of the moving object is suppressed and exactly controlled, a very fine image can be obtained.

Next, referring from Fig. 6 to Fig. 8, the fourth embodiment of the present invention will be described.

Fig. 6 is a view showing an embodiment of an image forming apparatus 50 according to the present invention, and in the image forming apparatus 50, an accommodation tray 52 in which a plurality of recording media 51 are laminated and accommodated, is provided, and on the upper side of one end portion of this accommodation tray 52, a taking out device 53 by which the recording media 51 in which images are to be recorded, are taken from the accommodation tray 52 one sheet by one sheet, is provided.

Hereupon, as the recording medium 51, a recording medium 51 which is formed of the first sheet having a color material layer and the second sheet having a base layer, and when the laser light is irradiated, the abrasion of the material is generated between the color material layer and the base layer, and by which the image can be formed, when the color material layer is transferred onto the second sheet, is applied.

On the lower side portion of this accommodation tray 52, a cylindrical supporting drum 54 for supporting the recording medium 51, is rotatably arranged, and it is structured in such a manner that this supporting drum 54 is rotated by the drum drive mechanism. Further, on the peripheral surface of the supporting drum 54, a gripper 55 for holding the front end portion of the recording medium 51 covering over whole width and a gripper 55b for holding the rear end portion of the recording medium 51 covering over whole width are provided extending in the shaft direction of the supporting drum 54.

On the side portion of the supporting drum 54, a driven roller 56 which is slidably contacted with the supporting drum 54 and driven, is provided in a contactable and separable manner to the supporting drum 54.

In the upper portion of the image forming apparatus 50, a delivery tray 57 for delivering the recording medium 51 in which the image is recorded, is provided.

Inside the image forming apparatus 50, a conveying path by which the recording medium 51 supplied from the accommodation tray 52 is conveyed to the upper portion of the peripheral surface of the supporting drum 54, and after the recording medium 51 is conveyed along the peripheral surface of the supporting drum 54, it is delivered from the upper portion of the peripheral surface of the supporting drum 54 to the delivery tray 57, is provided. At predetermined positions of this conveying path, a plurality of pairs of conveying rollers 58 for conveying the recording medium 51 in the conveying direction, are provided.

On the side portion of the peripheral surface of the supporting drum 54, a laser light irradiation device 59 as a recording section by which the laser light is irradiated to the recording medium 51 supported by the supporting drum 54, is provided, and in the lower portion of the laser light irradiation device 59, a holding section 60 by which the laser light irradiation device 59 is held, and which is reciprocally movable in the direction perpendicular to the conveying direction of the recording medium 51 by the linear motor, is provided.

Below the holding section 60, a plate-like supporting member 61 which extends in the direction perpendicular to the conveying direction of the recording medium 51, is provided, and at the center of the upper surface of this supporting member 61, a guide rail 62 which is a guide member for guiding the reciprocal movement of the holding section 60 in the width direction of the recording medium 51, is provided.

At a position opposite to the guide rail 62, a magnet section 63 constituting the linear motor, is supported by the supporting piece 74 integrally formed with a supporting member 61, and provided extending in the direction perpendicular to the conveying direction of the recording medium 51. The magnet section 63 is formed into shaft-like in such a manner that mutual N poles or S poles of a plurality of permanent magnets, not shown, whose section is circular, are connected.

At a position which is a center of the rear surface of the holding section 60 and corresponding to the magnet section 63, a movable coil 65 constituting the linear motor is provided, and the movable coil 65 has a cylindrically formed coil and this coil is covered by a box-like cover member. Then, the linear motor is structured in such a manner that the magnet section 63 penetrates the center of the movable coil 65.

On the surface opposite to a holding section fitting surface of the movable coil 65, a guided member 64 whose section is c-shaped, guided by a guide rail 62 is integrally provided with the movable coil 65. The guided member 64 and the magnet section 63 are arranged at a distance larger than the pitch length of the permanent magnet.

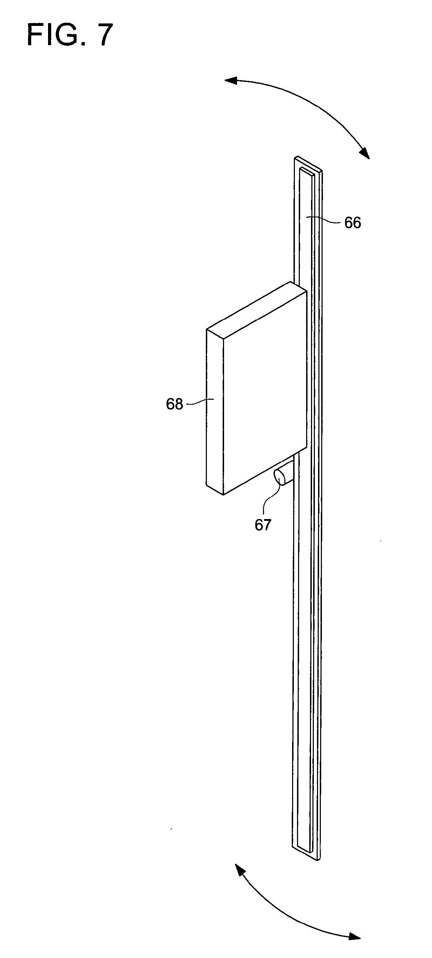

On a portion which is the upper surface of the supporting member 61 and a side of the guide rail 62, as shown in Fig. 6 and Fig. 7, when a linear scale 66 constituting the encoder for detecting a position or moving speed of the holding section 60 is fitted to the supporting member 61, a cylindrical first positioning member 67 with which one side surface of the linear scale 66 is brought into contact, and which determines a fitting position, is provided.

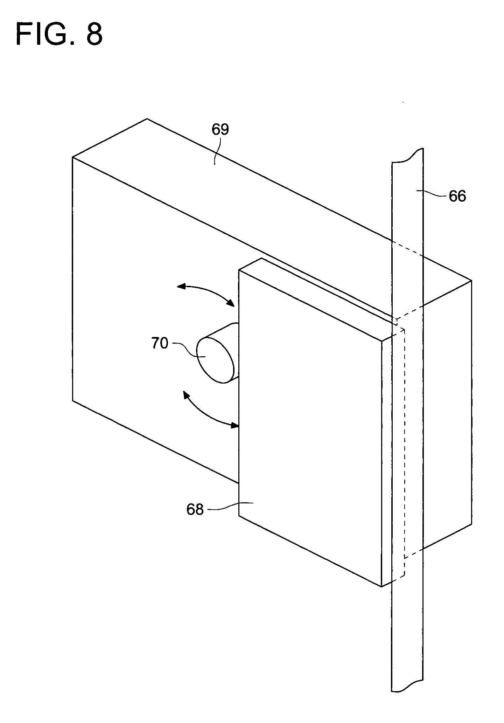

Further, on the lower surface of the holding section 60, as shown in Fig. 6 and Fig. 8, a sensor supporting member 69 for supporting a sensor section 68 which structures the encoder and reads the linear scale 66, is provided, and on one side surface of this sensor supporting member 69, when the sensor section 68 is fitted, the cylindrical second positioning member 70 with which the surface of opposite side to the opposite surface to the linear scale 66 of the sensor section 68 is brought into contact, and which determines the fitting position, is provided.

The linear scale 66 is fitted to the supporting member 61 in such a manner that one side surface is brought into contact with the first positioning member 67, and when the linear scale 66 is rotated along the peripheral surface of the first positioning member 67 by making this contact position as a fulcrum, the fitting position is adjusted so that it is parallel to the guide rail 62 and parallel to the sensor section 68 in the width direction.

Further, the sensor section 68 is fitted to the sensor supporting member 69 in such a manner that the surface of opposite side to the surface opposite to the linear scale 66 of the sensor section 68 is brought into contact with the second positioning member 70, and when the sensor section 68 is rotated along the peripheral surface of the second positioning member 70 around this contact position, the fitting position is adjusted so that the opposite surface to linear scale 66 of the sensor section 68 is parallel to the linear scale 66.

Hereupon, it is structured in such a manner that, according to the detection result of the encoder, the operation of linear motor is controlled, and the laser light irradiation device 59 is conveyed so that the scanning of laser light by the laser light irradiation device 59 is accurately conducted.

On the downstream side of the conveying path from the supporting drum 54, a peeling device 71 to peel the recording medium 51 which is exposed by the laser light irradiation device 59, into the first sheet and the second sheet, is provided, and lower the delivery tray 57, a collecting roller 72 by which the first sheet peeled from the second sheet by the peeling device 71 is wound and collected, is provided. Further, on the downstream side of the conveying path from the peeling device 71, a delivery roller 73 to deliver the second sheet in which the image is formed, to the delivery tray 57, is provided.

Next, operations of the fourth embodiment will be described.

When the image information is sent to the image forming apparatus 50, the taking out device 53 is actuated, and takes out the uppermost recording medium 51 accommodated in the accommodation tray 52, rotates the conveying roller 58, and conveys this taken-out recording medium 51.

When the recording medium 51 reaches in the vicinity of upper portion peripheral surface of the supporting drum 54, the supporting drum 54 is rotated clockwise in Fig. 6, by the drum drive mechanism, under the condition that the front end portion of the recording medium 51 is gripped by the gripper 55a. Following the rotation of the supporting drum 54, when the gripper 55a passes a position of the driven roller 56, the driven roller 56 comes into contact with the supporting drum 54, and the recording medium 51 is held by the peripheral surface of the supporting drum 54. Then, following the rotation of the supporting drum 54, the gripper 55b is moved to a position of the rear end portion of the recording medium 51, and when it grips the rear end portion of the recording medium 51, the driven roller 56 is separated from the supporting drum 54.

After that, when the supporting drum 54 is rotated in the opposite direction to the clockwise direction in Fig. 6, and following the rotation of supporting drum 54, the recording medium 51 is sent to a position of the laser light irradiation device 59, according to the image information, the laser light is irradiated to the recording medium 51 by the laser light irradiation device 59. At this time, following the reciprocal movement of the holding section 60 in the direction perpendicular to the conveying direction of the recording medium 51 by the drive of linear motor, the laser light irradiation device 59 scans the laser light to the recording medium 51.

Herein, because the magnet section 63, movable coil 65, guide rail 62 and guided member 64 are arranged in a row at the center of the holding section 60, the balance in the horizontal direction is good, further, because each component is arranged in close proximity, and because the influence of assembling accuracy of each component is hardly affected, the speed unevenness to the holding section 60 is decreased, and the laser light irradiation device 59 is smoothly conveyed.

Further, because the magnet section 63 is shaft-like, the movable coil 65 has a shape in which the cylindrical coil is covered by a box-like case member, and because it is a shape in which the rigidity is easily obtained, for a purpose that it is fixed on the holding section 60, the speed unevenness at the time of movement is more decreased.

Further, because the holding section 60 and guided member 64 are provided at a distance more than the pitch length of the permanent magnet from the magnet section 63, the influence of the magnetic field is hardly affected, and they are not attracted to the magnet section 63. Therefore, the speed unevenness to the holding section 60 is suppressed and the laser light irradiation device 59 is smoothly conveyed.

Further, because the linear scale 66 is fitted to the supporting member 61 in such a manner that it is parallel to the guide rail 62 by the first positioning member 67, and parallel to the sensor section 68 in the width direction, and the sensor section 68 is fitted to the sensor supporting member 69 in such a manner that the opposite surface to the linear scale of the sensor section 68 is parallel to the linear scale 66 by the second positioning member 70, a position or the moving speed of the laser light irradiation device 59 is exactly detected, and as this result, the image formation accuracy by the laser light irradiation device 59 is increased.

When the irradiation of the laser light by the laser light irradiation device 59 is completed, the recording medium 51 is conveyed along the conveying path by the conveying roller 58.

When the recording medium 51 is conveyed to a position of the peeling device 71, it is peeled into the first sheet and the second sheet by the peeling device 71. Then, the first sheet is collected by the collecting roller 72, and the second sheet is delivered to the delivery tray 57 by the conveying roller 58 and delivery roller 73.

From above, according to the present embodiment, because the magnet section 63, movable coil 65, guide rail 62 and guided member 64 are arranged in a row at the center of the holding section 60, the balance in the direction perpendicular to the moving direction is good, further, because each component is provided in close proximity, thereby, the influence of the assembling accuracy of each component is hardly affected, the speed unevenness to the moving object is decreased and the laser light irradiation device 59 is smoothly conveyed, as this result, a very file image can be obtained.

Hereupon, although each component is provided in close proximity, because the holding section 60 and guided member 64 are hardly affected by the influence of the magnetic flux formed by the magnet section 63, and are not attracted to the magnet section 63 at the time of movement, the generation of the speed unevenness is suppressed.

Further, because the linear scale 66 is fitted to the supporting member 61 in such a manner that it is parallel to the guide rail 62 by the first positioning member 67, and parallel to the sensor section 68 in the width direction, and because the sensor section 68 is fitted to the sensor fitting member in such a manner that the opposite surface to the linear scale 66 of the sensor section 68 is parallel to the linear scale 66 by the second positioning member 70, and a position or moving speed of the laser light irradiation device 59 is exactly detected, the image formation accuracy by the laser light irradiation device 59 is increased, and as this result, a very fine image can be obtained.

## Claims

1. An image reading device to read an image recorded on a recording medium, comprising:
a reading section;
a linear motor to move a moving object including at least one of the reading section and the recording medium in a moving direction so that the reading section reads the image on the recording medium being relatively moved to the reading section, the linear motor including:
a magnet section formed in a shape of a shaft extending in the moving direction; and
a movable coil to move either the reading section or the recording medium along the magnet section.

2. The image reading device of claim 1, further comprising:
a guide section to guide the straight movement of the moving object.

3. The image reading device of claim 2, wherein the guide section is a singular.

4. The image reading device of claim 1, 2 or 3, wherein the moving direction is vertical direction.

5. The image reading device of claim 4, further comprising:
a moving body having a moving object comprising either the recording medium on which the image is recorded or the reading section to read the image recorded on the recording medium;
a balancing weight balancing with the moving body;
a connecting member connecting the moving body and the balancing weight;
wherein the linear motor moves the moving body in the straight direction and the balancing weight is relatively moved to the moving body.

6. The image reading device of claim 5, further comprising:
a brake mechanism to prevent the self-weight dropping of the moving body or the balancing weight when the drive of the linear motor is stopped.

7. An image forming device to record an image on a recording medium, comprising:
a recording section;
a linear motor to move at least either the recording section or the recording medium in a moving direction so that the recording section record the image on the recording medium being relatively moved to the recording section, the linear motor including:
a magnet section formed in a shape of a shaft extending in the moving direction; and
a movable coil to move either the recording section or the recording medium along the magnet section.

8. The image forming device of claim 7, wherein the guide section is a singular.

9. The image forming device of claim 7 or 8, wherein the moving direction is a vertical direction.

10. The image forming device of claim 9, further comprising:
a moving body having the moving object comprising either the recording medium on which the image is recorded or the recording section to record the image on the recording medium;
a balancing weight balancing with the moving body;
a connecting member connecting the moving body and the balancing weight;
wherein the linear motor moves the moving body in the straight direction and the balancing weight is relatively moved to the moving body.

11. The image forming device of claim 10, further comprising:
a brake mechanism to prevent the self-weight dropping of the moving body or the balancing weight when the drive of the linear motor is stopped.

12. A moving device to move an object to be moved, comprising:
a linear motor to the object to be moved, the linear motor including:
a magnet section in which plural magnet elements are formed in a shape of a shaft; and
a movable coil; and
a guide member to guide a straight movement of the moving object;
wherein the linear motor and the guide member are arranged in a row along the direction perpendicular to the moving direction of the moving object.

13. The moving device of claim 12, further comprising:
a linear scale to form an encoder to detect location and the speed of the object to be moved on the magnet section; and
a sensor section to form an encoder to read the linear scale on the edge of the moving coil.

14. The moving device of claim 12 or 13, further comprising:
a holding section to hold the moving object on the moving coil, wherein the holding section and the magnet section are arranged at a distance longer than the pitch length of the magnet.

15. The moving device of claim 12, 13 or 14, further comprising:
a guided member guided by the guide member on the moving coil, wherein the guided member and the magnet section are arranged at a distance longer than the pitch length of the magnet.

16. The moving device of claim 12, 13, 14 or 15, wherein the moving direction of the object to be moved is a vertical direction.

17. The moving device of claim 16, further comprising:
a moving body having the object to be moved moving against or relatively to the magnet section;
a balancing weight balancing with the moving body; and
a connecting member to connect the holding section to the balancing weight;
wherein the moving body and the balancing weight are arranged in a row along the direction perpendicular to the moving direction of the object to be moved, and the balancing weight relatively moves to the moving body.

18. A moving device to move an object to be moved, comprising:
a linear motor to the object to be moved, the linear motor including:
a magnet section in which plural magnet elements are formed in a shape of a shaft; and
a movable coil;
a linear scale to detect a position and speed of the object to be moved; and
a positioning member to determine the fitting position of the linear scale;
wherein the linear scale is fixed by bring the one side of a surface of the linear scale into contact with the position member, the positioning member is provided on a fitting surface of the linear scale and the contact surface of the positioning member which contacts the linear scale is curvedly formed.

19. A moving device to move an object to be moved, comprising:
a linear motor to the object to be moved, the linear motor including:
a magnet section in which plural magnet elements are formed in a shape of a shaft; and
a movable coil;
a sensor section to read a linear scale to detect a position and speed of the object to be moved; and
a positioning member to determine the fitting position of the sensor;
wherein the sensor section is fixed by bring the one side of a surface of the sensor section into contact with the position member, the positioning member is provided on a fitting surface of the sensor section and the contact surface of the positioning member which contacts the sensor section is curvedly formed.

20. An image reading device to read an image by moving either a recording medium in which the image is recorded or a recording section to read the image recorded in the recording medium, the recording medium and the recording section move relative to each other, the image reading device including the moving device of any one of claims 12 to 19, wherein the moving device is either the recording medium or the recording section.

21. An image recording device to record an image on a recording medium by moving either the recording medium or a recording section to record the image on the recording medium, the recording medium and the recording section move relative to each other, the image reading device including: the moving device of any one of claims 12 to 19, wherein the moving device is either the recording medium or the recording section.
